# EUROPEAN PATENT APPLICATION

(11) **EP 1 333 694 A1**
(43) Date of publication of application: **06.08.2003**
(21) Application number: 03001290.0
(22) Date of filing: 22.01.2003
(51) Int. Cl.: H04Q 7/22

(54) **System and method for controlling notification of terminal location**

(30) Priority: 23.01.2002 JP 2002013627
(71) Applicant: NEC CORPORATION, Tokyo (JP)
(72) Inventor: Kazuhiro, Sakata, Minato-ku, Tokyo (JP)
(74) Representative: VOSSIUS & PARTNER

(57) **Abstract**

A system controls notification of a user location to a server in accordance with a notification control condition including a not-notifying condition and a process termination condition The location of the user is detected by a location detector. The server is not notified of the location of the user terminal when the not-notifying condition is satisfied unless the process termination condition is satisfied. When the process termination condition is satisfied, the location notification is terminated.

## Description

The present invention relates to a user location notification technique for use in an information providing system such as a system of providing users with location-related services.

There has been recently on its way to being realized a location-related service providing system which provides a user with information related to the current location of the user. Since the location information of a user is needed to provide such services, the system monitors the location of the user at regular time intervals and, when a location-related event occurs, provides the location-related service to the user. For example, when the user is moving through a sightseeing area or in the proximity thereof, the user is informed of the presence of sightseeing spots near the sightseeing area.

It is necessary for such a location-related service providing system to include a location detector for detecting the current location of a user. There have been proposed various location detectors or location information notification systems.

For example,
JP-A-2001-250026 discloses a location-related service providing system using a GPS-equipped mobile telephone, where GPS is an abbreviation for "global positioning system." In this system, the mobile telephone with a GPS receiver sends its location information obtained by the GPS receiver to a host server. The host server searches a database according to the received location information and sends the found location-related data to the mobile telephone.

JP-A-2001-326960 discloses an information distribution system which receives location information of a portable terminal to obtain the communication area where the portable terminal is now located. When the portable terminal has moved to another communication area, the system distributes information related to the currently located communication area to the portable terminal.

However, the location information of a user is also information of user's privacy. For example, there are places or hours where the user does not wish to notify the server of the location. According to the above prior arts, the user must turn off the portable terminal if the user does not wish to send its location to the server. Such an operation is not only very inconvenient but also trends to cause the user to carelessly forget to turn off.

An object of the present invention is to provide location notification control system and method allowing controlled notification of location information by easy operation so as to notify a server of the user's location only when the user wishes, not when the user does not wish.

According to an aspect of the present invention, a system for notifying a server of a location of a user terminal, includes: a storage for storing a notification control condition included in a notification request; a location detector for detecting a location of the user terminal; and a controller controlling location notification in response to the notification request such that location information of the user terminal is sent to the server depending on whether the notification control condition is satisfied.

The notification control condition may include at least one of a not-notifying condition and a process termination condition. The location notification is inhibited when the not-notifying condition is satisfied and is permitted when the not-notifying condition is not satisfied. The location notification is terminated when the process termination condition is satisfied. The notification control condition may include at least one of geographic location condition and time condition.

It is preferable that, unless the process termination condition is satisfied, the controller controls the location notification at predetermined time intervals such that the location notification is inhibited when the not-notifying condition is satisfied and is permitted when the not-notifying condition is not satisfied.

According to another aspect of the present invention, a method for notifying a server of a location of a user terminal, includes the steps of: a) receiving a notification control condition comprising at least a first condition; b) storing the notification control condition; c) detecting a location of the user terminal; d) repeatedly notifying the server of the location of the user terminal depending on the notification control condition unless the first condition is satisfied; and e) terminating notification of the location of the user terminal when the first condition is satisfied.

The notification request further includes a second condition. The step d) may include the steps of: d.1) when the first condition is not satisfied, determining whether the second condition is satisfied; d.2) when the second condition is not satisfied, notifying the server of the location of the user terminal; d.3) when the second condition is satisfied, not notifying the server of the location of the user terminal; and d.4) repeating the steps d.1)-d.3) unless the first condition is satisfied.
Fig. 1 is a block diagram schematically showing a location notification control system according to the present invention;
Fig. 2A is a diagram showing a location notification control system according to a first embodiment of the present invention;
Fig. 2B is a diagram showing a location notification control system according to a second embodiment of the present invention;
Fig. 2C is a diagram showing a location notification control system according to a third embodiment of the present invention;
Fig. 2D is a diagram showing a location notification control system according to a fourth embodiment of the present invention;
Fig. 3 is a flowchart showing an operation of a location notification control system according to the present invention; and
Fig. 4 is a block diagram showing an example of a portable communication terminal used in the location notification control system according to the first embodiment of the present invention.

### System configuration

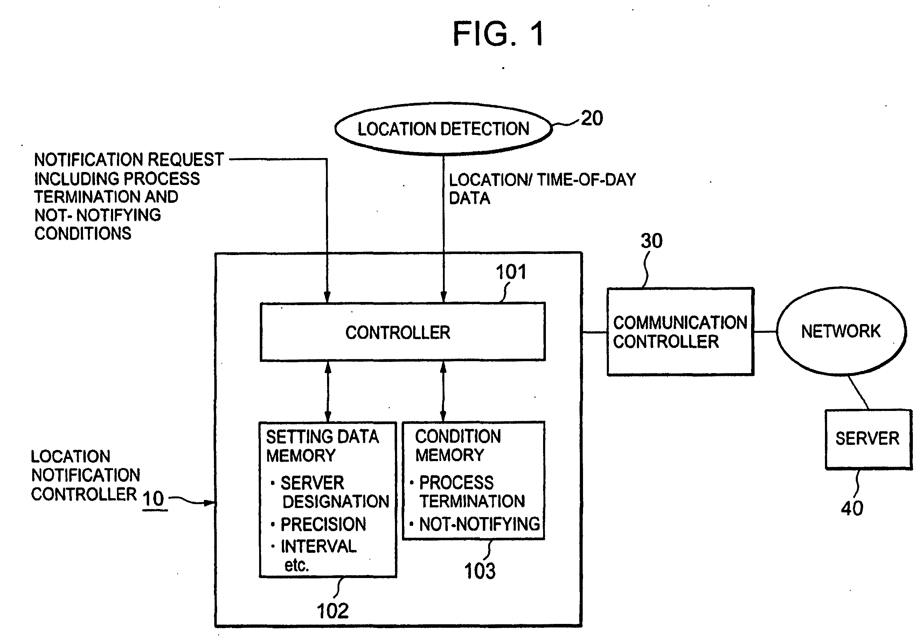

As shown schematically in Fig. 1, a location notification control system according to the present invention is composed mainly of a location notification controller 10, a location detection section 20, a communication controller 30 and a server 40 on a network.

The server 40 has a function of providing users with location-related services. For example, the server 40 provides a sightseeing guide service that notifies a user of the presence of a sightseeing spot when the user gets closer thereto. The server 40 may provide reminder service that reminds the user when in close vicinity to the shop to be visited. Accordingly, the server 40 necessitates location information of each user at regular intervals to determine where the user is currently located.

The location notification controller 10 is provided with location notification conditions, which are used to determine whether user's location information is sent to the server 40. The location notification controller 10 includes a controller 101, a setting data memory 102 and a condition memory 103.

The setting data memory 102 stores various designation information related to location, notification including designation of the server 40, the precision and expression form of location information to be sent to the designated server 40, the location notifying time interval. These designation information are previously stored by a system manager or a user.

The controller 101 inputs a notification request from a user through an input device such as a keypad of a portable terminal. The notification request includes notification control conditions including a process termination condition and a not-notifying condition, which will be described later. The notification control conditions are stored in the condition memory 103.

The controller 101 compares the notification control conditions with location/time-of-day data received from the location detection section 20 to determine whether the status of the user terminal satisfies the notification control conditions. The controller 101 is typically a program-controlled processor on which a location notification control program runs to perform the location notification as described later.

The location detection section 20 may be a location detector provided in the user terminal or a location management server on the network. Anyway, the location detection section 20 detects the current location of the user terminal and outputs it to the location notification controller 10.

The communication controller 30 causes the location notification controller 10 to be connected to the server 40 under the control of the controller 101. As described later, when the status of the user terminal satisfies the notification control conditions stored in the condition memory 103, the location information is sent to the server 40 at intervals of a time period previously set in the setting data memory 102.

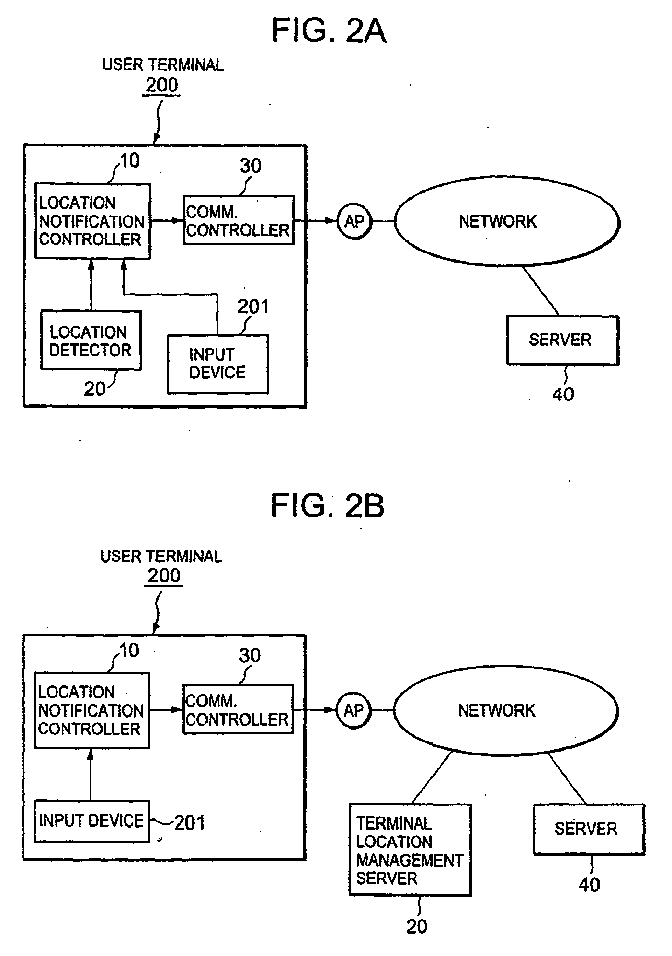

The location notification control system according to the present invention may be implemented in various configurations. The first to fourth embodiments of the present invention will be described with reference to Figs. 2A-2D, In which function blocks similar to those described in Fig. 1 are denoted by the same reference numerals.

As shown in Fig. 2A, a user terminal 200 such as a mobile telephone or a portable communication terminal includes the location notification controller 10, the location detector 20, the comnunication controller 30, an input device 201 such as a ten-key, and other necessary devices (not shown) including a microprocessor, a display, a radio interface, and so on.

In the case of a mobile telephone, for example, the user terminal 200 is connected to a nearest one of base stations (or access points) of the mobile telephone network and its location is detected by the location detector 20. The location detector 20 may be a GPS receiver which receives GPS signals from GPS satellites to determine where the user terminal 200 is now located. Alternatively, the location detector 20 may receive a base station identifier from the base station to which the user terminal 200 is currently connected. The base station identifier is converted into a predetermined expression form to produce the location data of the user terminal 200.

The location notification controller 10 transmits the location data to the server 40 when the location data received from the location detector 20 satisfies the notification control conditions stored in the condition memory 103. Since the location data is sent to the server 40 through the network when it satisfies the notification control conditions, the location information is made strictly secret and further traffic on the network is reduced.

As shown in Fig. 2B, the user terminal 200 includes the location notification controller 10, the communication controller 30, the input device 201, and other necessary devices (not shown) including a microprocessor, a display, a radio interface, and so on. The location detector 20 is provided as a terminal location management server 20 on the network. The terminal location management server 20 monitors and stores the location of each user terminal 200 and, when having received a location data request from a user terminal 200, sends the location data back to the user terminal 200. The location notification controller 10 transmits the location data to the server 40 when the location data received from the terminal location management server 20 satisfies the notification control conditions stored in the condition memory 103. Since the user terminal 200 is designed without the need of the location detector 20, the reduction in size and weight is made possible.

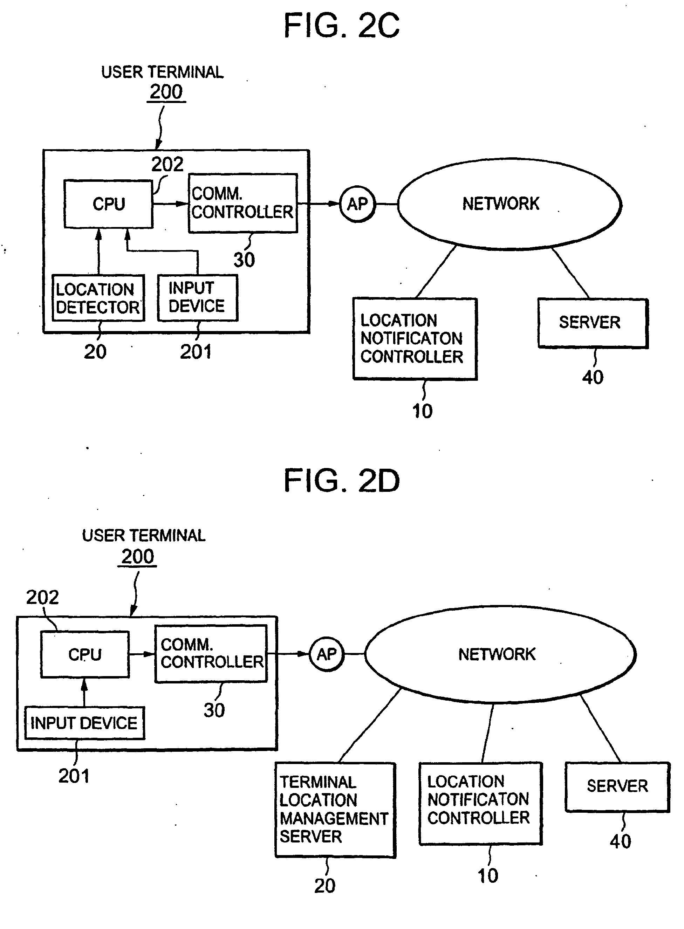

As shown in Fig. 2C, the user terminal 200 includes the location detector 20, the communication controller 30, the input device 201, a microprocessor 202, and other necessary devices (not shown) including a display, a radio interface, and so on. The location notification controller 10 is provided as a control server on the network outside the user terminal 200.

The user terminal 200 transmits the notification request to the location notification controller 10 and, in response to the location data request from the location notification controller 10, transmits its location data to the location notification controlier 10. The location notification controller 10 transmits the location data to the server 40 when the location data satisfies the notification control conditions stored in the condition memory 103. Since the user terminal 200 is designed without the need of the location notification controller 10, the reduction in size and weight is made possible.

As shown in Fig. 2D, the user terminal 200 includes the communication controller 30, the input device 201, the microprocessor 202, and other necessary devices (not shown) including a display, a radio interface, and so on. The location notification controller 10 is provided as a control server on the network outside the user terminal 200. The location detector 20 is also provided as a terminal location management server 20 on the network outside the user terminal 200. The location notification controller 10 and the terminal location management server 20 may be incorporated in one server on the network.

The terminal location management server 20 monitors and stores the location of each user terminal 200. When having received the notification request from the user terminal 200, the location notification controller 10 transmits the location data request to the terminal location management server 20. In response to the location data request, the terminal location management server 20 transmits the location data of the user terminal 200 to the location notification controller 10. The location notification controller 10 transmits the location data to the server 40 when the location data received from the terminal location management server 20 satisfies the notification control conditions stored in the condition memory 103. Since the user terminal 200 is designed without the need of the location notification controller 10 and the location detector 20, the size and weight thereof can be reduced and further the load on the microprocessor 202 can be also reduced.

### Notification control conditions

As for the notification control conditions stored in the condition memory 103, arbitrary expression and content may be used as long as the location notification controller 10 can read them. The notification control conditions may be geographic location conditions, conditions regarding attributes of a geographic location, time conditions, physical data conditions, and the like. The notification control conditions are composed of two types of conditions: process termination condition and not-notifying condition.

### 1) Process termination condition

A first-type condition is a process termination condition that is used to unconditionally stop the location notification when the process termination condition is satisfied. For example, when the user wishes to stop the reminder service at home, the area around the home is set as a process termination condition. In this case, when the user is located outside the preset area, the location notification is performed and therefore the server 40 compares the user's current location with the preset area to provide the user with the reminder service. When the user enters the preset area, the location notification is terminated and therefore the reminder service stops within the preset area.

### 2) Not-notifying condition

A second-type condition is a not-notifying condition that is used to obtain a desired service only when the not-notifying condition is not satisfied. In other words, the location information is not sent to the server if the not-notifying condition is satisfied but if the not-notifying condition is not satisfied.

For example, in the case where the user wishes to obtain restaurant information only when the user is located in downtown, areas other than the downtown area are set as a not-notifying condition. In this case, when the user is located outside the downtown area (the not-notifying condition is satisfied), the location notification is not performed. When the user enters the downtown area (the not-notifying condition is not satisfied), the location notification starts and therefore the server 40 can search database for restaurant information related to the user's location and transmit it to the user terminal 200.

### 3) Others

A time condition may be set as the notification control condition. For example, when the user wishes to obtain restaurant information only in dinner time periods, time periods other than the dinner time period are set as a not-notifying condition. In this case, when the present time falls out of the dinner time period, the location notification is not performed. When the present time falls into the dinner time period, the location notification starts and therefore the server 40 can search database for restaurant information related to the location information of the user and transmit it to the user terminal 200.

The time condition may be set in addition to the process termination and not-notifying conditions. For example, when the user wishes to obtain restaurant information of the downtown only in dinner time periods, time periods other than the dinner time period and areas other than the downtown area are set as a not -notifying condition. In this case, when the current time falls out of the dinner time period or the user is located outside the downtown area, the location notification is not performed. When the current time falls into the dinner time period and the user is located within the downtown area, the location notification starts and therefore the server 40 can search database for restaurant information related to the location information of the user and transmit it to the user terminal 200.

As another example, when the user wishes to terminate the location-related information service after a lapse of a preset time period, the elapse of the time period is set as a process termination condition. In this case, before the lapse of the preset time period, the location notification is performed and therefore the server 40 provides the user with the location-related information service. However, after the lapse of the preset time period, the location notification is not sent to the server 40 and thereby the location-related information service stops.

In addition, the attribute of a current location such as temperature, the attribute of a user such as body heat or pulse rate, and the like may be used as a notification control condition.

As described above, if a condition necessitates status information of a user terminal such as "after a lapse of a preset time period from now on" or "when it is located 500 meters away from this location", then the status information is obtained by the location detector 20 or other appropriate means.

### Operation of location notification controller

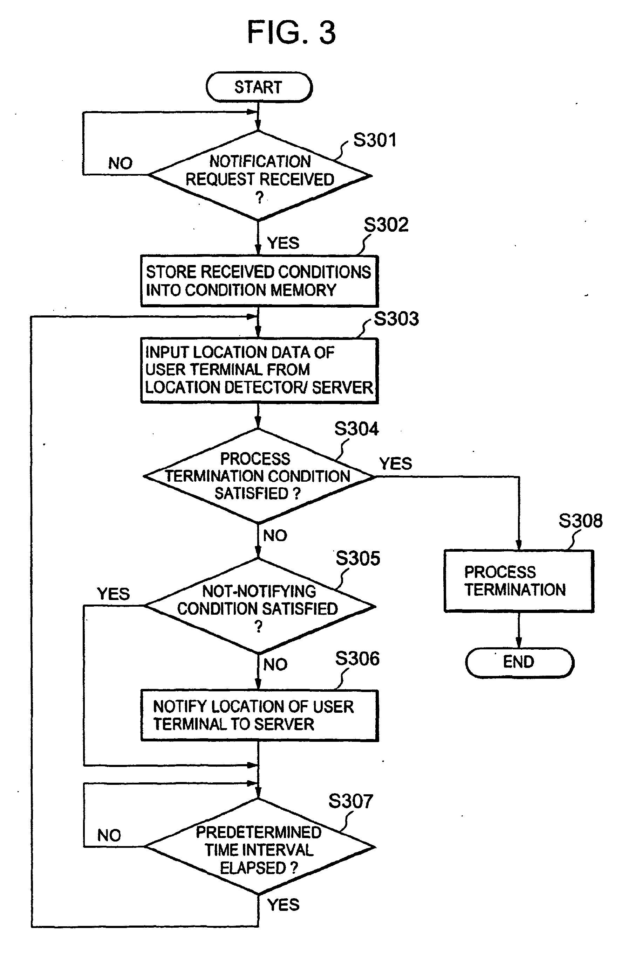

An example of the location notification operation will be described with reference to Fig. 3.

As shown in Fig. 3, the location notification controller 10 controls notification of the location of a user. First, various designation information related to location notification are previously stored into the setting data memory 102 by the service provider or the user operating the input device 201. When the user wishes to start the conditional location notifying service, the user operates the input device 201 to enter a process termination condition and a not-notifying condition as described before. At this time, the designation information may be entered, which allows the user to designate a server, location detection precision, time interval and the like for each notification request.

Thereafter, the user terminal 200 transmits a notification request including an identification number (e.g. telephone number) of the user terminal 200 and the process termination condition and the not-notifying condition to the location notification controller 10.

When having received the notification request from the user terminal 200 (YES in step S301), the process termination and/or not-notifying conditions are stored in the condition memory 103 (step S302). Subsequently, the controller 101 inputs location information of the user terminal 200 from the location detector 20 or the terminal location management server (step S303). In the case of time conditions, the prosent time information may be also received. When the location detector 20 is incorporated in the terminal 200 as shown in Figs. 2A and 2C, the location information is sent to the location notification controller 10. In the case where the location detector 20 is provided as the terminal location management server on the network as shown in Figs. 2B and 2D, the location notification controller 10 sends a data request including the ID number of the user terminal 200 to the terminal location management server and then receives the location information of the user terminal 200 from the terminal location management server.

Upon receipt of the location information of the user terminal 200, the controller 101 determines whether the location information satisfies the process termination condition (step S304). If the location information does not satisfy the process termination condition (NO in step S304), then it is determined whether the location information satisfies the not-notifying condition (step S305).

If the location information does not satisfy the not-notifying condition (NO in step S305), the controller 101 converts the location information of the user terminal 200 into the predetermined format and notifies the server 40 (step S306). If the location information satisfies the not-notifying condition (YES in stop S305), the step S306 is skipped and therefore the location information is not sent to the server 40.

The steps S303-S306 are repeatedly performed at predetermined time intervals preset in the setting data memory 102 (step S307). When the location information satisfies the process termination condition (YES in step S304), the location notification process is terminated (step S308).

In the case where the process termination condition is not designated, it may be always determined that the location information does not satisfy the process termination condition (NO in step S304). Similarly, in the case where the not-notifying condition is not designated, it may be always determined that the location information does not satisfy the not-notifying condition (NO in step S305).

Alternatively, the user may register default process termination condition and/or default not-notifying condition in the condition memory 103. In this case, if the process termination condition and/or the not-notifying condition is not designated, then a corresponding default condition will be used in the step S304 and/or S305.

As described before, other conditions such as time condition, attribute condition and the like may be used in the steps S304 and 305. In these cases, necessary information such as the time of day is obtained from outside. In the case of the location detector 20 being a GPS receiver, the time-of-day information can be also obtained. The time-of-day information may be received from an external time-of-day clock server on the network.

At the step S306, the controller 101 may send a service request to the server 40 in addition to the location notification. Further, the controller 101 may receive the service information from the server 40 and send it to an external device or present it to the user through a display or the like.

The location notification controller 10 can terminate the location notification process depending on information received from the server 40. For example, when having received a service end signal from the server 40, the location notification controller 10 terminates the location notification.

The user can designate a desired service previously or when entering the notification request. The location notification controller 10 receives the notification request and the desired service request and sends the service request to the server 40. Accordingly, the location notification controller 10 sends the location information to the server 40 and thereby the user can obtained the desired service.

The location notification controller 10 may terminate the location notification immediately after having received a notification termination request from the user terminal 200. When the user suddenly wishes to stop the location notification, the location notification can stop immediately.

When the location notification terminates, the user and/or the server 40 may be notified of the notification termination. The user and/or the server 40 can know the location notification termination.

### Example

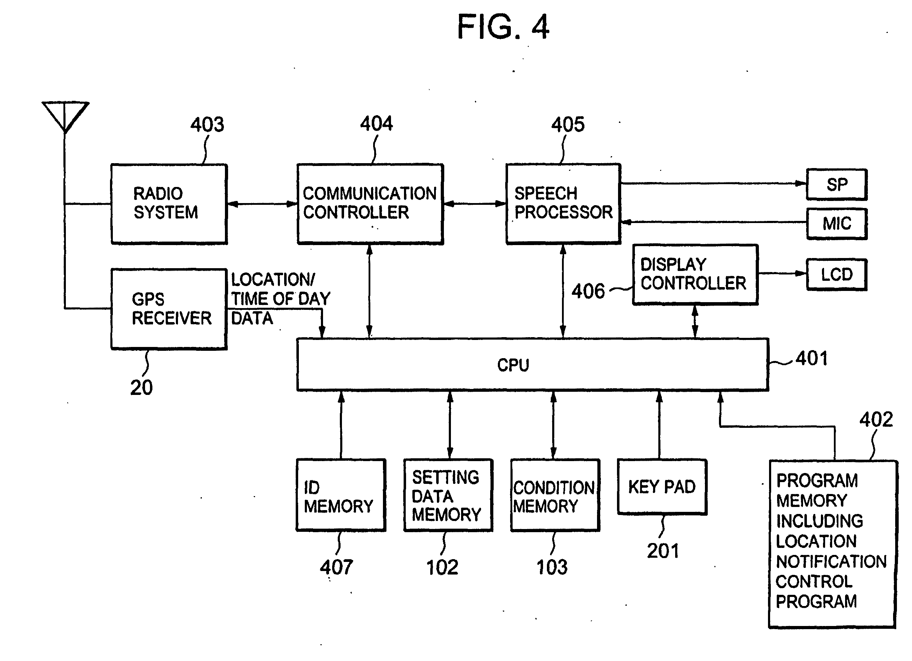

Referring to Fig. 4, the location notification control system according to the first embodiment as shown in Fig. 2A may be implemented in a mobile telephone terminal or a portable information terminal such as PDA (personal digital assistant). Blocks similar to those previously described in Figs. 1 and 2A are denoted by the same reference numerals and their details will be omitted.

In this example, the mobile telephone terminal includes a microprocessor 401 and a program memory 402 storing the location notification control program. The microprocessor 401 runs the location notification control program to implement the location notification controller 10.

The location/time-of-day data is obtained by the GPS receiver 20 and radio communication with a base station of the mobile telephone system can be made through a radio system 403 and a communication controller 404. Telephone communication is made through a speech processor 405, telephone-receiver (speaker) and telephone-transmitter (microphone). Information received from the server or the like is displayed on a display such as a LCD through a display controller 406. The identification of the mobile telephone terminal itself is made by the uniquely assigned telephone number stored in an ID memory 407.

In the above-described manner, the location information of a user is sent to the server 40 only when a user-designated condition is satisfied. In other words, the location notification termination or temporary notification inhibition can be made based on the user-designated condition in response to a notification request received from the user. Accordingly, by just simple user's operation, the location information can be sent to the server only in the situation the user desires.

## Claims

1. A system for notifying a server of a location of a user terminal, comprising:
a location detector (20) for detecting a location of the user terminal,
**characterized by**:
a storage (103) for storing a notification control condition included in a notification request; and
a controller (101) controlling location notification in response to the notification request such that location information of the user terminal is sent to the server depending on whether the notification control condition is satisfied.

2. The system according to claim 1, wherein the notification control condition comprises at least one of a not-notifying condition and a process termination condition,
wherein the location notification is inhibited when the not-notifying condition is satisfied and is permitted when the not-notifying condition is not satisfied, and
wherein the location notification is terminated when the process termination condition is satisfied.

3. The system according to claim 1 or 2, wherein the notification control condition comprises at least one of geographic location condition and time condition.

4. The system according to claim 2 or 3, wherein, unless the process termination condition is satisfied, the controller controls the location notification at predetermined time intervals such that the location notification is inhibited when the not-notifying condition is satisfied and is permitted when the not-notifying condition is not satisfied.

5. A method for notifying a server of a location of a user terminal, **characterized by** the steps of:
a) receiving a notification control condition comprising at least a first condition;
b) storing the notification control condition;
c) detecting a location of the user terminal;
d) repeatedly notifying the server of the location of the user terminal depending on the notification control condition unless the first condition is satisfied; and
e) terminating notification of the location of the user terminal when the first condition is satisfied.

6. The method according to claim 5, wherein the notification request further includes a second condition, wherein the step d) comprises the steps of:
d.1) when the first condition is not satisfied, determining whether the second condition is satisfied;
d.2) when the second condition is not satisfied, notifying the server of the location of the user terminal;
d.3) when the second condition is satisfied, not notifying the server of the location of the user terminal; and
d.4) repeating the steps d.1)-d.3) unless the first condition is satisfied.

7. The method according to claim 5 or 6, wherein the first condition is one of geographic location condition and time condition.

8. The method according to claim 6 or 7, wherein the second condition is one of geographic location condition and time condition.

9. The method according to claim 5, 6, 7 or 8, wherein the notification control condition is designated before receiving a notification request from the user terminal.

10. The method according to claim 5, 6, 7, 8 or 9, wherein, immediately after receiving a notification termination request from the user terminal, the notification of the location of the user terminal is terminated.

11. The method according to claim 5, 6, 7, 8, 9 or 10, wherein, when the notification of the location of the user terminal is terminated, at least one of the server and the user terminal is notified of notification termination.

12. A program instructing a computer to notify a server of a location of a user terminal, the program comprising the steps of:
a) receiving a notification control condition comprising at least a first condition;
b) storing the notification control condition;
c) detecting a location of the user terminal;
d) repeatedly notifying the server of the location of the user terminal depending on the notification control condition unless the first condition is satisfied; and
e) terminating notification of the location of the user terminal when the first condition is satisfied.

13. The program according to claim 12, wherein the notification request further includes a second condition, wherein the step d) comprises the steps of:
d.1) when the first condition is not satisfied, determining whether the second condition is satisfied;
d.2) when the second condition is not satisfied, notifying the server of the location of the user terminal;
d.3) when the second condition is satisfied, not notifying the server of the location of the user terminal; and
d.4) repeating the steps d.1)-d.3) unless the first condition is satisfied.
